# FASCICULE DE BREVET EUROPEEN

(11) **EP 1 007 392 B1**
(45) Date de publication et mention de la délivrance du brevet: **21.05.2003**
(21) Numéro de dépôt: 98942824.8
(22) Date de dépôt: 04.09.1998
(51) Int. Cl.: B60R 21/06

(54) **AGENCEMENT D'HABITACLE DE VEHICULE DE TRANSPORT DE PASSAGERS ET DE CHARGES COMPRENANT UN SUPPORT ET UN DISPOSITIF DE SEPARATION DU VOLUME DE CHARGEMENT DU VEHICULE**
INNENRAUMANORDNUNG EINES TRANSPORTFAHRZEUGS FÜR PASSAGIERE UND LASTEN MIT EINEM TRÄGER UND EINER TRENNUNGVORRICHTUNG FÜR DEN LADERAUM
ARRANGEMENT OF THE PASSENGER COMPARTMENT OF A VEHICLE TRANSPORTING PASSENGERS AND LOADS COMPRISING A SUPPORT AND A DEVICE FOR SEPARATING THE PASSENGER SPACE LOAD COMPARTMENT

(30) Priorité: 05.09.1997 FR 9711048
(43) Date de publication de la demande: 14.06.2000
(73) Titulaire: Renault s.a.s., 92100 Boulogne Billancourt (FR)
(72) Inventeur: BOULAY, François, F-92500 Rueil Malmaison (FR); RIOU, Jean-Christophe, F-78390 Bois d'Arcy (FR); RODIER, Teiva, F-75012 Paris (FR); SAADOUN, Gilbert, F-77270 Villeparisis (FR)
(86) Numéro de dépôt international: FR9801894
(87) Numéro de publication internationale: WO99012774

(56) Documents cités:
- DE-A- 3 909 397

## Description

L'invention concerne un agencement d'habitacle de véhicule comportant un support et un dispositif de séparation d'un volume de chargement, de l'habitacle du véhicule.

L'invention concerne plus particulièrement un tel véhicule dans lequel une rangée de sièges qui sépare un volume de chargement de l'habitacle, peut occuper au choix, une position arrière d'utilisation et une position dans laquelle la surface de chargement est augmentée.

Le modèle d'utilité allemand 76.34005 propose de placer entre les sièges avant et le volume de chargement un dispositif de séparation susceptible d'être déployé transversalement entre les parois latérales opposées du véhicule.

La publication FR-A-2 668 990 décrit un dispositif correspondant au préambule de la revendication 1 qui combine le pliage d'une banquette arrière avec la mise en action d'un élément de protection pour le placer à la verticale de l'élément de siège. Le siège peut être placé dans une position déployée arrière d'utilisation ou dans une position repliée avant. Une glissière au niveau du pavillon permet de placer la partie supérieure de l'élément de protection en position arrière ou avant, à la verticale de l'élément de siège, en l'espèce le dossier. Ce dispositif présente l'inconvénient le lier la position de l'élément de protection avec la position repliée ou déployée de l'élément de siège de la banquette.

La publication DE-A-3 909 397 décrit un dispositif de séparation escamotable dans le haut d'un dossier de siège et qui peut occuper deux positions d'utilisation par déplacement de la partie supérieure du dispositif entre une première et une deuxième position d'accrochage, sur des crochets portés par une paroi latérale de l'habitacle.

La publication FR-A- 2 741 019 décrit un filet de protection avec des profilés pour accrochage des mailles du filet, encliquetage et tension du filet par sangle coopérant avec des éléments du véhicule. Les éléments de véhicule sont soit le dossier du siège déployé en position arrière d'utilisation, soit le plancher juste derrière le siège replié vers l'avant. Dans les deux cas, lors d'une décélération, c'est le siège qui devra absorber l'énergie cinétique d'une charge venant au contact du filet.

D'une manière générale, la structure d'un siège de véhicule ne permet pas l'accrochage d'un dispositif qui sépare le volume de chargement de l'habitacle d'un véhicule. En effet, si la force de décélération du véhicule est supérieure à 200 daN, l'amplitude du déplacement de la charge transportée et sa force d'impact peuvent être préjudiciables pour la sécurité des passagers du véhicule assis sur leurs sièges.

Pour remédier à cet inconvénient, la publication EP-A- 710 589 décrit déjà un dispositif constitué par une paroi transversale articulée sur le plancher du véhicule. Le bord libre de la paroi porte dans ce cas un filet escamotable de rétention des charges, susceptible d'être extrait de son logement jusqu'aux éléments récepteurs d'accrochage disposés dans la zone du pavillon du véhicule.

La mise en oeuvre d'un tel dispositif nécessite la mise en place préalable de la paroi avant l'accrochage du filet.

L'invention a pour but de remédier aux inconvénients mentionnés ci-dessus et de fournir simultanément la possibilité de diviser un volume de chargement placé dans la partie arrière du véhicule, non seulement vers l'avant, mais également vers le haut.

L'invention a également pour but de simplifier la mise en oeuvre du dispositif de séparation en fonction de l'importance du volume de chargement du véhicule et d'empêcher les éléments de la charge transportés, de pénétrer accidentellement dans l'habitacle.

Selon l'invention, il est prévu un agencement d'habitacle de véhicule selon la revendication 1.

Selon d'autres caractéristiques :
- le dispositif de séparation est caractérisé par le fait que la boucle d'allongement des sangles est retenue par une couture de résistance déterminée ;
- le support est un rail de guidage, ledit rail étant rigidement fixé dans la carrosserie et porteur d'une multitude de crans d'ajustement ;
- le dispositif est constitué par un filet dont les bords horizontaux sont solidaires de crochets portés par deux axes tubulaires munis de moyens d'accrochage latéraux prévus pour coopérer avec le support ;
- l'un des axes tubulaires porte les sangles de fixation ;
- les axes tubulaires de support du filet, sont constitués par un profilé porteur de crochets élastiques de retenue des mailles dudit filet et qu'un tube de rigidification intérieur au profilé est porteur d'embouts d'accrochage et de finition ;
- le dispositif comporte des moyens de tension de sangle prévus pour être rapportés entre la sangle et une paroi du véhicule munie d'éléments d'accrochage.

Il est avantageux, dans le véhicule, de fixer le dispositif de séparation avec un effort de tension déterminé, préalablement au chargement du véhicule et de placer ledit dispositif dans la position la plus favorable.

Il peut donc être ajouté que :
- la première partie du problème posé est résolue, dans un véhicule du type précité, en ce qu'il est prévu selon l'invention, des moyens d'accrochage et de tension du dispositif de séparation, qui assurent l'arrangement du coté libre du dispositif, en direction longitudinale, tandis que des parties réceptrices, disposées dans la zone du pavillon, assurent le maintien sensiblement vertical dudit dispositif, et ;
- la seconde partie du problème est résolue en ce que le dispositif de séparation est muni de moyens d'accrochage latéraux, respectivement aux parties réceptrices disposées dans la zone du pavillon, et de moyens d'accrochage et de tension, disposées au contact de parois du volume de chargement.

D'autres avantages et caractéristiques de l'invention seront mis en évidence dans la description qui suit, donnée à titre d'exemple, en référence aux dessins annexés dans lesquels :
- La figure 1 est une représentation perspective d'un habitacle de véhicule automobile illustrant le dispositif de séparation d'un volume de chargement localisé derrière une banquette.
- La figure 2 est une section II-II du dispositif représenté à la figure 1.
- La figure 3 est une représentation perspective d'une partie réceptrice du dispositif disposée dans la zone du pavillon.
- La figure 4 est une représentation en coupe d'un moyen d'accrochage et de tension du dispositif.

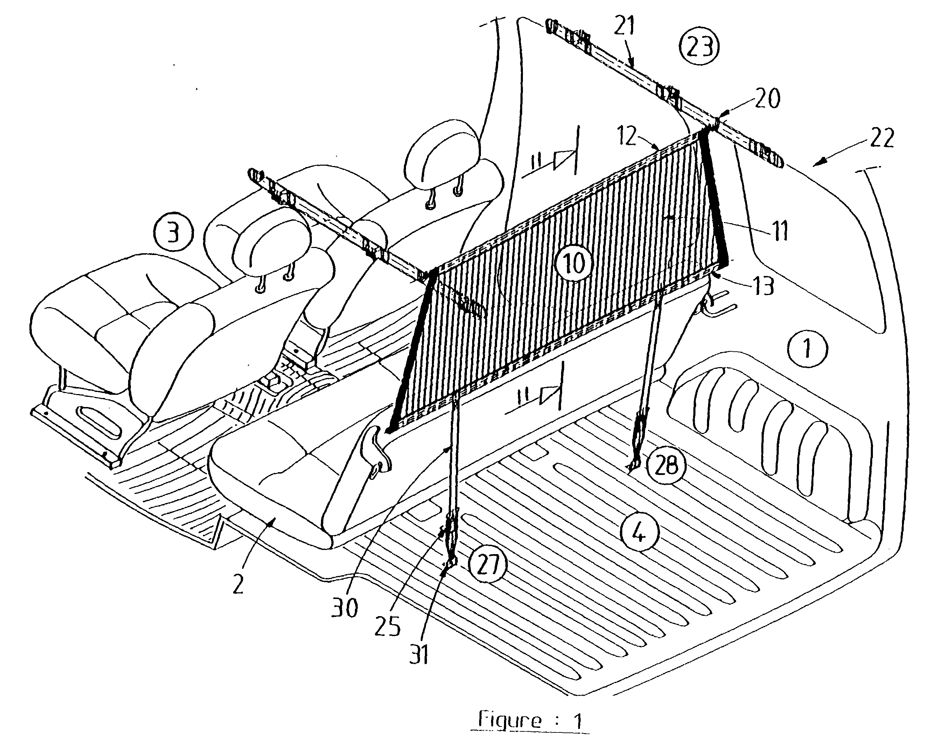

La figure 1 est une représentation simplifiée de l'habitacle d'un véhicule, combiné avec son volume de chargement afin de montrer le déploiement du dispositif de séparation.

Dans la zone arrière du véhicule, le volume de chargement 1 peut être augmenté par rabattement ou démontage de la rangée de sièges ou de la banquette arrière 2, et peut être fermé par une porte arrière non représentée. Le volume 1 est séparé de l'habitacle 3 par le dispositif, désigné par la référence 10 dans son ensemble.

Le dispositif 10 occupe au choix une position arrière, lorsque les sièges 2 sont dans une position d'utilisation, et une position plus avancée, dans laquelle la surface de chargement 4 est augmentée, par suite du rabattement des sièges 2.

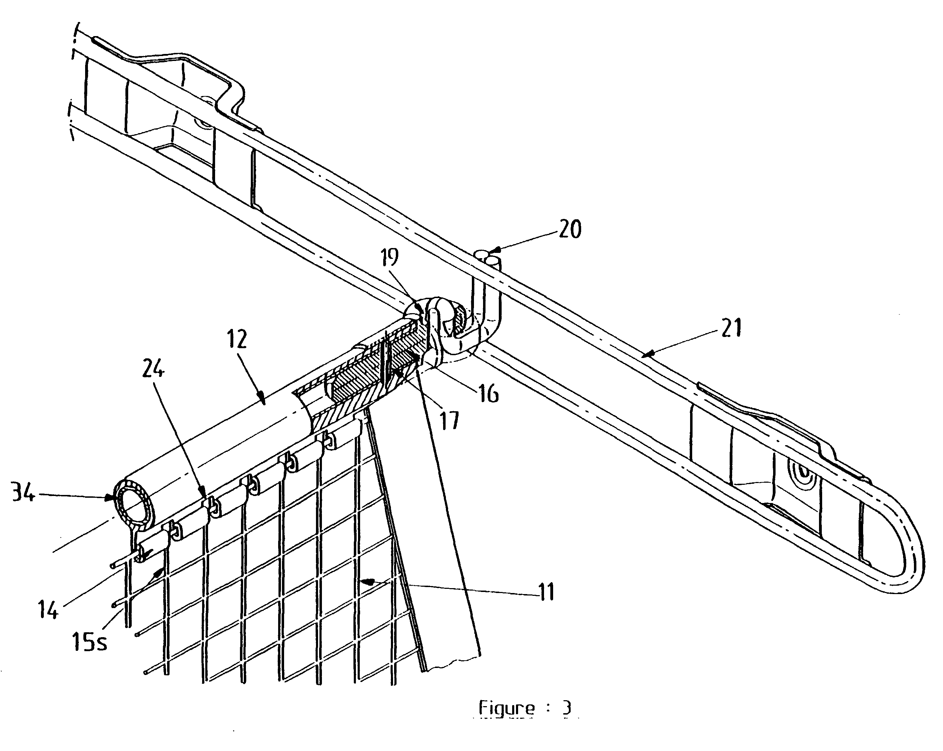

Le dispositif 10 est constitué essentiellement par un filet 11 de forme générale trapézoïdale, placé en tension entre deux axes tubulaires 12, 13 porteurs, comme représentés à la figure 3 de crochets de montage 14 des mailles supérieures 15s et inférieures 15i, du filet. Le filet 11 s'étend verticalement entre la zone du pavillon 23 et la surface de chargement 4. Les crochets 14 évitent par ailleurs toute confection de coutures au contact du filet et assurent le montage rapide de ce dernier sur les axes tubulaires 12,13.

Les axes 12,13 sont agencés à des hauteurs différentes et leur écartement vertical est en correspondance avec la hauteur de chargement du véhicule.

L'axe supérieur 12 porte des embouts d'accrochage 16, encastrés dans les extrémités opposées de l'axe, qui sont maintenus par des rivets 17. Chaque embout d'accrochage 16, qui peut également faire partie d'un système d'enroulement du filet, constitue un oeillet 19, monté sur un crochet récepteur 20, ainsi que le montre la figure 3. Le crochet 20 est réalisé dans un fil monté le long d'un support longitudinal 21, rigidement fixé sur une paroi 22, dans la zone du pavillon 23.

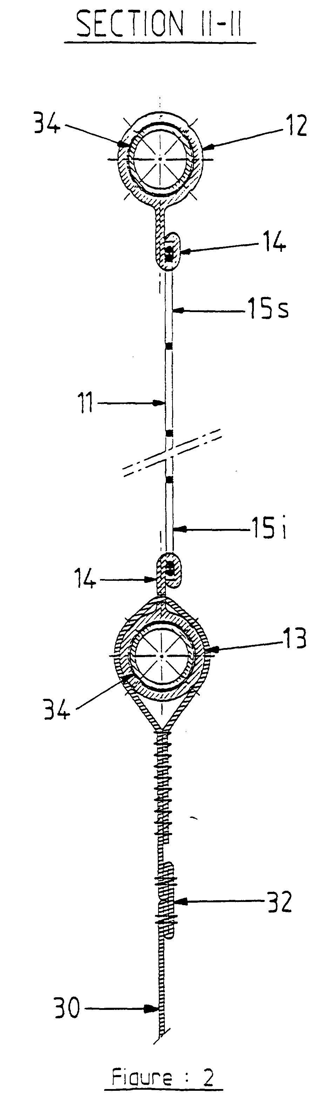

Comme représenté à la figure 2, les axes tubulaires 12, 13, supports du filet 11, sont constitués par un profilé, porteur de crochets élastiques 14, de retenue des mailles du filet. Ces crochets de retenue 14 sont séparés par des crans de passage 24 des mailles, et un tube de rigidification 34, intérieur au profilé, est porteur des embouts d'accrochage 16 ou de pièces de finition.

Sans sortir du cadre de l'invention, le support 21 peut tout aussi bien être réalisé sous la forme d'un rail de guidage, porteur de crans d'ajustement de la position longitudinale de l'embout d'accrochage 16.

La figure 1 montre également que l'axe inférieur 13 porte des moyens de tension 25, associés à des moyens d'accrochage inférieurs 26 au contact de parois ou de la surface de chargement 4.

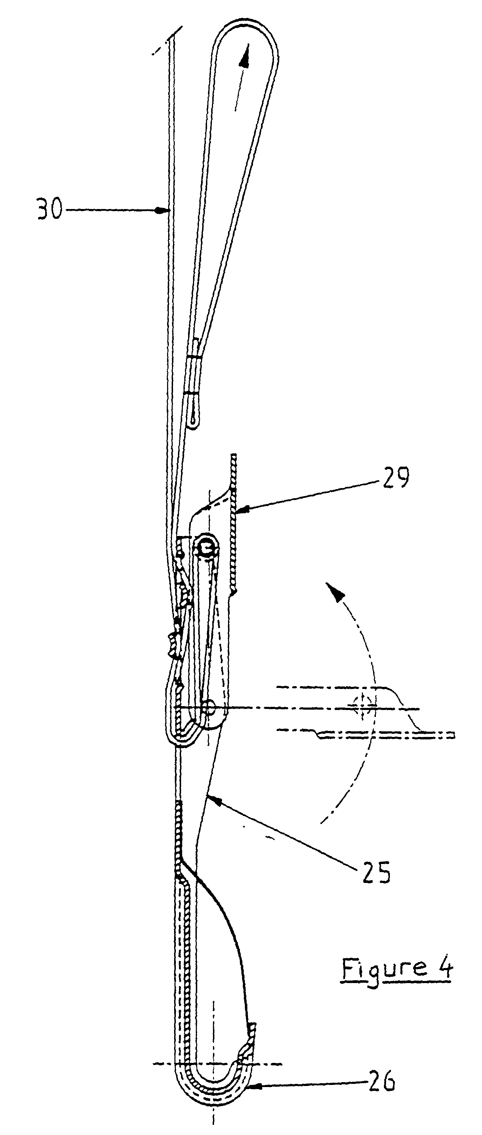

D'une manière générale, chaque moyen de tension 25, tel que représenté à la figure 4, est constitué par une palette d'actionnement manuelle 29, à laquelle sont associées des organes de coincement à came, pour assurer la tension et le coincement d'une sangle 30 portée par l'axe inférieur 13. On notera que le moyen de tension 25, connu en soi, fait plus généralement partie des accessoires associés aux dispositifs d'arrimage des charges sur un véhicule. A titre d'exemple, les moyens de tension 25 sont rapportés sur les parois correspondantes au moyen de crochets 26 engagés dans des étriers ou d'anneaux d'accrochage 31 fixés à la paroi correspondante.

Enfin, selon une disposition connue des sangles de ceintures de sécurité, la sangle telle que 30 porte une boucle d'allongement et de retenue 32, indémontable et réalisée par couture. La résistance de la boucle 32 est ainsi déterminée en fonction de la force de décélération de la charge au contact du filet 11. On se référera utilement aux réalisations de telles boucles à la lecture de la publication FR-A- 1 393 185.

## Revendications

1. Agencement d'habitacle de véhicule de transport de passagers et de charges comportant un support (21) et un dispositif de séparation (10) du volume de chargement de l'habitacle du véhicule, dans lequel une rangée de sièges (2) sépare le volume de chargement (1) de l'habitacle (3) et occupe au choix une position arrière d'utilisation et une position dans laquelle la surface de chargement (4) est augmentée, ledit dispositif de séparation coopèrant par les extrémités (19, 20) d'un premier bord avec le support (21) **caractérisé en ce que** le support (21) permette l'ajustement de la position longitudinale du dispositif de séparation dans l'habitacle et **en ce que** le dispositif de séparation porte, sur un deuxième bord, des sangles (30) de fixation dans l'habitacle présentant une configuration en boucle d'allongement dont la retenue est de résistance déterminée en fonction de la force de décélération d'une charge au contact dudit dispositif.

2. Agencement selon la revendication 1, **caractérisé par le fait que** la boucle d'allongement des sangles (30) est retenue par une couture de résistance déterminée.

3. Agencement selon l'une quelconque des revendications 1 à 2, **caractérisé en ce que** le support (21) est un rail de guidage, ledit rail étant rigidement fixé dans la carrosserie et porteur d'une multitude de crans d'ajustement.

4. Agencement selon l'une quelconque des revendications 1 à 3, **caractérisé par le fait que** ledit dispositif (10) est constitué par un filet (11) dont les bords horizontaux sont solidaires de crochets (14) portés par deux axes tubulaires (12, 13) munis de moyens d'accrochage latéraux (16, 19) prévus pour coopérer avec le support (21).

5. Agencement selon la revendications 4, **caractérisé par le fait que** l'un des axes tubulaires (13) porte les sangles (30) de fixation.

6. Agencement selon l'une quelconque des revendications 4 à 5, **caractérisé par le fait que** les axes tubulaires (12, 13) de support du filet (11), sont constitués par un profilé porteur de crochets élastiques (14) de retenue des mailles dudit filet (11) et qu'un tube de rigidification (34) intérieur au profilé est porteur d'embouts (16) d'accrochage et de finition.

7. Agencement selon l'une quelconque des revendications 1 à 6, **caractérisé en ce qu'**il comporte des moyens de tension (25) de sangle (30) prévus pour être rapportés entre la sangle (30) et une paroi du véhicule munie d'éléments d'accrochage (31).

## Patentansprüche

1. Ausgestaltung des Fahrgastraumes eines Kraftfahrzeuges für den Transport von Passagieren und von Lasten, mit einer Halterung (21) und mit einer Vorrichtung (10) zum Trennen des Laderaumes vom Fahrgastraum des Fahrzeuges, wobei eine Sitzreihe (2) den Laderaum (1) vom Fahrgastraum (3) trennt und wahlweise eine rückwärtige Stellung der Benutzung oder eine Stellung einnimmt, in der die Ladefläche (4) vergrößert ist und wobei die Vorrichtung zum Trennen über die Enden (19,20) eines ersten Randes mit der Halterung (21) zusammenwirkt, **dadurch gekennzeichnet, dass** die Halterung (21) die Einstellung der Stellung in Längsrichtung der Vorrichtung zum Trennen im Fahrgastraum ermöglicht und dass die Vorrichtung zum Trennen an einem zweiten Rand Gurtbänder (30) zum Befestigen im Fahrgastraum aufweist, die mit einer Schließe zur Verlängerung ausgestattet sind, deren Rückhaltekraft eine Funktion der auftretenden Kraft einer Last auf die Vorrichtung bei einer Verzögerung ist.

2. Ausgestaltung nach Anspruch 1, **dadurch gekennzeichnet, dass** die Schließe für die Verlängerung der Gurtbänder (30) durch eine Naht mit vorgegebener Festigkeit gehalten wird.

3. Ausgestaltung nach einem der Ansprüche 1 bis 2, **dadurch gekennzeichnet, dass** die Halterung (21) eine Führungsschiene ist, wobei diese Schiene fest mit der Karosserie verbunden ist und eine Vielzahl von Einstellaussparungen aufweist.

4. Ausgestaltung nach einem der Ansprüche 1 bis 3, **dadurch gekennzeichnet, dass** die Vorrichtung (10) aus einem Netz (11) besteht, dessen waagrechte Ränder mit Haken (14) verbunden sind, die an zwei rohrförmigen Achsen (12,13) angeordnet sind, welche mit seitlichen Einhängeanordnungen (16,19) versehen sind, die mit der Halterung (21) zusammenwirken.

5. Ausgestaltung nach Anspruch 4, **dadurch gekennzeichnet, dass** eine der rohrförmigen Achsen (13) die Gurtbänder (30) für die Befestigung trägt.

6. Ausgestaltung nach einem der Ansprüche 4 bis 5, **dadurch gekennzeichnet, dass** die rohrförmigen Achsen (12,13) für die Aufnahme des Netzes (11) aus Profilteilen bestehen, die die elastischen Haken (14) für die Aufnahme der Maschen des Netzes (11) tragen und dass ein Versteifungsrohr (34) im Inneren des Profilteils angeordnet ist, das die Endhülsen (16) und Endstücke trägt.

7. Ausgestaltung nach einem der Ansprüche 1 bis 6, **dadurch gekennzeichnet, dass** eine Anordnung (25) vorgesehen ist um das Gurtband (30) unter Spannung zu setzen, die zwischen dem Gurtband (30) und einer Wand des Fahrzeuges angeordnet ist, die mit Halteteilen (31) versehen ist.

## Claims

1. An arrangement of a vehicle compartment for carrying passengers and loads comprising a support (21) and a separation device (10) for separating the load volume from the compartment of the vehicle, in which a row of seats (2) separates the load volume (1) from the compartment (3) and occupies as desired a rear position of use and a position in which the loading surface (4) is increased, said separation device co-operating by way of the ends (19, 20) of a first edge with the support (21), **characterised in that** the support (21) permits adjustment of the longitudinal position of the separation device in the compartment and that the separation device on a second edge carries straps (30) for fixing in the compartment being of a configuration in the form of an elongation loop, the retention of which is of a resistance determined in dependence on the deceleration force of a load upon contact with said device.

2. An arrangement according to claim 1 **characterised in that** the elongation loop of the straps (30) is retained by stitching of a given resistance.

3. An arrangement according to either one of claims 1 and 2 **characterised in that** the support (21) is a guide rail, said rail being rigidly fixed in the body and carrying a multitude of adjustment notches.

4. An arrangement according to any one of claims 1 to 3 **characterised in that** the device (10) is formed by a net (11), the horizontal edges of which are fixed with respect to hooks (14) carried by two tubular bars (12, 13) provided with lateral hooking means (16, 19) for co-operating with the support (21).

5. An arrangement according to claim 4 **characterised in that** one of the tubular bars (13) carries the fixing straps (30).

6. An arrangement according to either one of claims 4 and 5 **characterised in that** the tubular bars (12, 13) for supporting the net (11) are formed by a shaped member carrying elastic hooks (14) for retaining the meshes of said net (11) and that a stiffening tube (34) which is internal to the shaped member carries hooking and finishing end portions (16).

7. An arrangement according to any one of claims 1 to 6 **characterised in that** it comprises means (25) for tensioning the strap (30) which are intended to be fitted between the strap (30) and a wall of the vehicle which is provided with hooking elements (31).
